# EUROPÄISCHE PATENTSCHRIFT

(11) **EP 3 308 933 B1**
(45) Veröffentlichungstag und Bekanntmachung des Hinweises auf die Patenterteilung: **12.08.2020**
(21) Anmeldenummer: 17202178.4
(22) Anmeldetag: 17.09.2013
(51) Int. Cl.: B29C 45/28, B29C 45/16, B65D 35/12

(54) **VORRICHTUNG UND VERFAHREN ZU HERSTELLUNG EINES TUBENKOPFES**
DEVICE AND METHOD FOR MANUFACTURING A TUBE HEAD
DISPOSITIF ET PROCÉDÉ DE FABRICATION D'UNE TÊTE DE TUBE

(30) Priorität: 19.09.2012 CH 16962012
(43) Veröffentlichungstag der Anmeldung: 18.04.2018
(62) Teilanmeldung aus: 13765980.1
(73) Patentinhaber: Alpla-Werke Alwin Lehner GmbH und Co. KG, 6971 Hard (AT)
(72) Erfinder: Krammer, Christian, 13100-105 Campinas (BR)
(74) Vertreter: Riederer Hasler & Partner Patentanwälte AG

(56) Entgegenhaltungen:
- EP-A1- 2 311 624
- JP-A- H05 131 495
- US-A1- 2008 258 356
- US-A1- 2011 233 824

## Beschreibung

Die Erfindung betrifft eine Spritzgiessvorrichtung und ein Verfahren zur Herstellung eines Tubenkopfes, sowie einen Tubenkopf.

### Stand der Technik:

Die EP-A-1 033 318 offenbart ein Verfahren zur Herstellung einer Tubenschulter, bei welchem eine erste Materialkomponente in eine erste Kavität gespritzt wird, diese Materialkomponente aus dieser ersten Kavität auf einem Träger in teilplastischem Zustand entnommen und freigestellt wird, derart, dass beim Einführen des Trägers und der ersten Materialkomponente in eine zweite Kavität ein Freiraum gebildet wird mit mindestens einer Fläche, die nach dem Spritzen einer zweiten Materialkomponente als mechanischer Anschlag der ersten Materialkomponente gegenüber der zweiten Materialkomponente dient. Dadurch kommt eine formschlüssige Verbindung zwischen der ersten und der zweiten Materialkomponente zustande. Das beanspruchte Verfahren hat den Vorteil, dass der Materialverbrauch einer zweischichtigen Tube reduziert und die Zykluszeit bei der Herstellung verkürzt wird. Nachteilig hingegen ist, dass zwei unterschiedliche Kavitäten für die Herstellung der Tubenschulter nötig sind und die Tubenschulter bei der Herstellung von einer Kavität zur nächsten Kavität transportiert werden muss.

Aus der WO 00/23340 ist ein Tubenkopf bekannt, welcher einen mindestens 3-schichtigen Aufbau hat. Dabei ist eine Barriereschicht von einer inneren und einer äusseren Schicht umhüllt, einschliesslich an den Enden des Tubenkopfes, wo die innere und äussere Schicht zu einer Schicht vereinigt sind. Das heisst, die Enden der Barriereschicht sind von der inneren und äusseren Schicht umhüllt oder umkapselt. Die Herstellung des Tubenkopfes erfolgt mittels Coinjection. Dabei wird ein Strukurwerkstoff A während einer Zeitperiode Tₒ in eine Spritzdüse eingespiesen. Ab einer bestimmten Zeit der Einspeisung des Strukturwerkstoffs wird ein Materialstrom aus Barrierewerkstoff für kurze Zeit koinjiziert. Nach Absetzen des Barrierewerkstoffstroms wird die Einspritzung des Strukturwerkstoff noch für eine bestimmte Zeit weiter fortgesetzt, um die eingespritzte Strukturwerkstoffmenge zu stabiisieren. Obwohl das beschriebene Verfahren als Coinjektionsverfahren bezeichnet ist, werden tatsächlich nur während einer sehr kurzen Zeitperiode beide Werkstoffe eingespritzt. Nachteilig am Verfahren der WO 00/23340 ist, dass der Tubenkopf immer noch nachbearbeitet werden muss. Der Angusszapfen, welcher sich durch die zentrale Öffnung der Einspritzdüse zwangsläufig ergibt, muss weggeschnitten und die Mündungskanten müssen nachbearbeitet werden.

US Patentanmeldung Nr. 2011/0233824 bezieht sich auf ein Verfahren zur Herstellung von rotationssymmetrischen Körpern, bei welchem der geschmolzene Kunststoff nicht über einen zentralen Anspritzpunkt sondern eine ringförmige Öffnung in die Kavität eingespritzt wird. Zur Durchführung des Verfahrens kommt eine Vorrichtung zum Einsatz, welche aus einer äusseren, einen zentralen Kanal aufweisenden Form besteht. Im Kanal ist eine Schliessstange axial beweglich geführt. Die Schliessstange besitzt am vorderen Ende einen verbreiterten, rotationssymmetrischen Kopf, dessen grösster Umfang im Zusammenwirken mit der Innenwandung des Kanals ein Ventil bildet. Zwischen der Schliessstange und der Innenwandung des Kanals ist ein Ringraum vorhanden, durch welchen im Betrieb der geschmolzene Kunststoff gepresst wird. Zum Herstellen eines rotationssymmetrischen Körpers wird die Schliessstange aus der Form heraus bewegt, sodass zwischen dem Kanal und der Schliessstange ein ringförmiger Austrittskanal gebildet ist. Für die Ausbildung des Hohlraums des Körpers ist ein Kern vorgesehen, an dessen Stirnseite eine Ausnehmung vorgesehen ist. In diese Ausnehmung greift der Kopf ein, wenn das Ventil geöffnet ist.

Die Patentanmeldung US 2002/0028266 A1 beschreibt eine Ventilstiftanordnung für eine Spritzgießvorrichtung mit einem Ventilstift, der in der Lage ist, sich in einer Düse nach oben und nach unten zu bewegen, um ein Ringtor zu öffnen und zu schließen. Ein ringförmiger Durchgang wird durch die Düse erzeugt und ist ungehindert und ohne Einschränkung an allen Punkten bis zu und durch das Ringtor, so daß die Schmelze frei zum Tor und je nach Stellung des Ventilstiftes in den Formhohlraum fließt. Der Ventilstift hat einen Kopf mit einem größeren Durchmesser als der Ventilstiftschaft zum selektiven Schließen des Tores. Der Durchmesser des Ringtorkanals ist größer als der Schmelzkanaldurchmesser, um zu ermöglichen, daß Teile mit großen Öffnungen darin gebildet werden.

Die Offenbarung JP H05 131495 A behandelt die Bereitstellung eines Sandwich-Spritzgießverfahrens, mittels welchem es möglich ist, die Einspritzgeschwindigkeit eines Kernmaterials korrekt zu steuern und die Dicke einer Hautschicht beliebig einzustellen.Während das Kernmaterial injiziert wird, wird die Position einer Kernnadel variiert, wodurch die Querschnittsfläche eines Kernmaterialverbindungswegs variiert wird, der durch den Injektionsauslass einer Hautnadel hindurchgeht, wodurch die Injektionsmenge des Kernmaterials pro Stundeneinheit variiert wird. Damit lassen sich flächige Artikel herstellen.

US-Patentanmeldung 2008/0258356 A1 betrifft einen integral blasgeformten Beutel-in-Behälter und eine Vorform zum Blasformen des Beutel-in-Behälters. Eine innere Schicht und eine äußere Schicht werden verwendet, wobei die Vorform nach dem Blasformen einen zweischichtigen Behälter bildet und wobei die erhaltene innere Schicht des Behälters nach dem Einbringen eines Gases an einer Grenzfläche von der so erhaltenen äußeren Schicht freigesetzt wird zwischen den beiden Schichten.

### Aufgabe

Es ist deshalb ein Ziel der vorliegenden Erfindung, eine Spritzgiessvorrichtung und ein Verfahren zur Herstellung eines Tubenvorderteils resp. Tubenkopfes mit oder ohne Barriereschicht vorzuschlagen, mit welchem eine Nachbearbeitung des Tubenkopfes nicht mehr nötig ist. Ein weiteres Ziel ist die Zurverfügungstellung eines Tubenkopfes mit Barriereschicht, bei welchem die zumindest zwei Schichten fest miteinander verbunden sind. Noch ein Ziel ist, die Zykluszeit zur Herstellung des Tubenkopfes zu verringern, um die Produktivität zu steigern.

### Beschreibung

Diese und weitere Ziele werden durch die Vorrichtung gemäss Anspruch 1, das Verfahren nach Anspruch 9, bzw. den Gegenstand nach Anspruch 15 erreicht. Vorteilhafte Ausgestaltungen des erfindungsgemässen Gegenstands und des Verfahrens sind in den Unteransprüchen definiert.

Die Erfindung betrifft eine Spritzgiessvorrichtung zur Herstellung mindestens eines Tubenkopfes mit einer Tubenschulter und daran angeformtem Hals mit einer Auspressöffnung. Die Vorrichtung umfasst einerseits ein Formwerkzeug, welches einen dem herzustellenden Tubenkopf entsprechenden Formhohlraum umschliesst, und andererseits eine Düse zum Einspritzen einer von einer Einspritzeinheit stammenden Kunststoffschmelze. Die Düse besitzt einen Düsenkörper, eine optionale Ventilhülse und eine Ventilnadel, welche im Düsenkörper axial beweglich (in der Längsachse der Ventilnadel) aufgenommen sind. Die Ventilnadel und Ventilhülse können unabhängig voneinander bewegt werden. Die Ventilnadel ist von einem ersten Ringraum umgeben, welcher als erster Strömungskanal für eine erste Materialkomponente dient. Am vorderen Ende der Düse ist eine Düsenöffnung vorgesehen, welche in einer zurückgezogenen Position der Ventilnadel durch den Ventilnadelkopf verschlossen und in einer vorgeschobenen Position der Ventilnadel durch den Ventilnadelkopf freigegeben ist.

Erfindungsgemäss ist in der vorgeschobenen Position der Ventilnadel eine ringförmige Austrittsöffnung gebildet, welche mit einem als Angussöffnung dienenden Ringspalt des Formwerkzeugs korreliert resp. eine Fluidverbindung zwischen dem mindestens einen Strömungskanal und dem Formhohlraum herstellt. Die ringförmige Austrittsöffnung hat den Vorteil, dass der Schmelzestrom radial nach aussen und direkt über den Ringspalt des Formwerkzeugs in den Formhohlraum eindringen kann. Das heisst, es wird im Unterschied zum eingangs zitierten Stand der Technik nicht über eine zentrale, im Wesentlichen punktförmige Angussöffnung in die Form eingespritzt, sondern über einen Ringspalt, welcher direkt im Halsbereich der Tube ansetzt. Dadurch kann ein Angusszapfen und damit eine Nachbearbeitung des Tubenkopfes vermieden werden.

Durch die ringförmige Austrittsöffnung und den im Formwerkzeug vorgesehenen Ringspalt ist bei vorgeschobener Ventilnadel, d.h. geöffnetem Ventil, eine Fluidverbindung zwischen dem Formhohlraum und dem ersten Strömungskanal gebildet.

Vorteilhaft besitzt das Formwerkzeug einen Formeinsatz mit einer Innenkontur, welche im Wesentlichen die äussere Gestalt des Tubenkopfes definiert, und einen Kern mit einer Aussenkontur, welcher die innere Gestalt des Tubenkopfes abbildet. In der Produktionsstellung des Formwerkzeugs ist somit ein dem Tubenkopf entsprechender Formhohlraum zwischen der dem Formeinsatz und dem Kern vorhanden.

Vorteilhaft hat der Kern stirnseitig eine Ausnehmung in der Gestalt eines einseitig geschlossenen Hohlzylinders für die Aufnahme des Ventilnadelkopfes. Dadurch ist die Ventilnadel auch in der Offenstellung lateral geführt. Zweckmässigerweise ist der Formeinsatz mehrteilig und weist im Halsbereich zwei bewegliche Schiebeteile auf, welche in entgegengesetzten Richtungen zwischen einer Offenstellung und einer Schliessstellung bewegbar sind. Die beweglichen Schiebeteile erlauben die Herstellung eines Tubenhalses mit einem Aussengewinde.

Vorzugsweise ist zwischen dem Kern und dem Formeinsatz der Ringspalt vorgesehen. Dies ist eine einfache und zweckmässige Ausführungsform, welcher die direkte Herstellung eines fertigen Tubenkopfes ermöglicht. Dabei kann ein axialer zylindrischer Abschnitt des Formeinsatzes im Zusammenwirken mit dem Nadelkopf ein erstes Ventil bilden. Vorteilhaft weist der Ventilnadelkopf einen zylindrischen Körper und eine konische Spitze auf. Durch die konische Spitze kann der Ventilnadelkopf sicher in die stirnseitige Ausnehmung des Kerns eingeführt werden. Der Durchmesser des Ventilnadelkopfes resp. des zylindrischen Körpers ist grösser als der Durchmesser des Ventilnadelschaftes, sodass Platz für die Ausbildung eines Strömungskanals vorhanden ist.

Gemäss einer erfindungsgemässen Ausführungsform ist eine bewegliche, den Ventilnadelschaft umgebende Ventilhülse vorgesehen, wobei zwischen dem Ventilnadelschaft und der Ventilhülse ein zweiter Ringraum vorhanden ist, welcher als zweiter Strömungskanal für eine zweite Materialkomponente dient. Diese Ausführungsform hat den Vorteil, dass zwei Materialkomponenten gleichzeitig injiziert werden können, wenn die Ventilnadel und die Ventilhülse unabhängig voneinander axial beweglich sind. Zweckmässigerweise ist der Durchmesser des Ventilnadelkopfes grösser als der Durchmesser des Ventilnadelschaftes, sodass der Ventilnadelkopf als Ventilsitz für die Ventilhülse dienen kann.

Vorzugsweise ist zwischen dem Ventilnadelschaft und dem Ventilnadelkopf ein konischer Übergangsbereich vorgesehen ist. Zur Bildung eines zweiten Ventils kann die Stirnseite der Ventilhülse mit dem konischen Übergangsbereich dichtend zusammenwirken. Der Übergangsbereich dient in diesem Fall als Ventilsitz für die bewegliche Ventilhülse.

Gemäss einer Weiterentwicklung weist der konische Übergangsbereich angrenzend an den zylindrischen Körper eine umlaufende Vertiefung auf. Die Vertiefung hat den Zweck, die Kunststoffschmelze umzulenken, damit der Ringspalt des Formwerkzeugs der Kunststoffschmelze möglichst wenig Strömungswiderstand entgegensetzt.

Im Weiteren offenbart ist auch ein Verfahren zur Herstellung mindestens eines Tubenkopfes mit einer Tubenschulter und daran angeformten Hals mit Auspressöffnung in einem Spritzgiessverfahren. Dieses ist dadurch gekennzeichnet, dass ein oder mehrere Materialkomponenten durch einen Ringspalt in den Formhohlraum eingespritzt werden.

Der Ringspalt ist dabei zweckmässigerweise an der Halsinnenwandung , vorzugsweise am äusseren oder äussersten Halsrand, vorgesehen, sodass nach dem Spritzgiessen kein Angusszapfen oder dergleichen übrigbleibt.

Zur Herstellung eines mindestens zweischichtigen Tubenkopfes kann eine erste Materialkomponente und eine zweite Materialkomponente gleichzeitig eingespritzt werden. Gemäss einer Ausführungsvariante kann die zweite Materialkomponente mit einer zeitlichen Verzögerung eingespritzt werden. Dies hat den Vorteil, dass die erste Materialkomponente die zweite Komponente mindestens stirnseitig umschliessen kann.

Gemäss einer Herstellungsvariante wird die zweite Materialkomponente erst eingespritzt, wenn der Formhohlraum durch die erste Materialkomponente zu mindestens 50%, vorzugsweise mindestens 65% und besonders bevorzugt zu mindestens 75% gefüllt ist. Auf diese Weise kann ein dreischichtiger Aufbau realisiert werden, wenn die zweite Komponente in die Seele der ersten Komponente eingespritzt wird. Unter "Seele" ist in Fachkreisen das Innere einer Schicht gemeint. Vorliegend ist das Schichtinnere beim Einspritzen der zweiten Komponente immer noch fliessfähig, sodass die zweite Komponente sich im Innern der ersten Komponente ausdehnen kann.

Wenn am Ende eines Spritzgiesszyklus die zweite Materialkomponente eine bestimmte Zeitdauer vor der ersten Materialkomponente abgesetzt wird, kann die zweite Materialkomponente, üblicherweise ein Barrierewerkstoff, von der ersten Komponente stirnseitig umfasst sein. Vorteilhaft beträgt die erwähnte Zeitdauer zwischen 0.01 und 0.5s, vorzugsweise zwischen 0.05 und 0.3s und besonders bevorzugt zwischen 0.1 und 0.2 s. Für die Durchführung des Verfahrens wird vorzugsweise eine Spritzgiessvorrichtung verwendet, welche eine ringförmige Austrittsöffnung besitzt.

Des weiteren ist ein Tubenkopf mit einer Tubenschulter und einem an die Tubenschulter angeformtem Hals mit einer Auspressöffnung nach dem Verfahren herstellbar, wie es in diesem Dokument beschrieben ist. Der durch das Verfahren hergestellte Tubenkopf hat den Vorteil, dass durch die gleichzeitige Injektion der beiden Materialkomponenten während der gesamten Dauer des Arbeitszykluses ein guter Verbund der beiden Materialien erzielt werden kann. Zweckmässigerweise hat die äussere Materialkomponente beim Abkühlen einen grösseren Schwund als die innere Materialkomponente. Dies hat den positiven Effekt, dass die äussere Materialkomponente auf die innere Komponente quasi aufgeschrumpft wird. Es hat sich in Versuchen gezeigt, dass ein um wenigstens 5%, vorzugsweise um wenigstens 10%, und besonders bevorzugt um wenigstens 1 5% grösserer Schwund der äusseren Strukturkomponente ausreichend ist, um einen guten Verbund der beiden Schichten zu erhalten. Das heisst, wenn eine zweite Komponente einen Schwund von 5% hat, dann sollte die erste Komponente mindestens einen Schwund von 5.25% aufweisen.

Eine vorteilhafte Ausführungsform sieht vor, dass die Tube wenigsten zwei Schichten besitzt, nämlich eine äussere Schicht ais einem Strukturwerkstoff und eine innere Schicht aus einem Barrierewerkstoff. Eine andere vorteilhafte Ausführungsform sieht vor, dass die Tube drei Schichten besitzt, nämlich eine äussere Schicht und eine innere Schicht aus einem Strukturwerkstoff und eine Zwischenschicht aus einem Barrierewerkstoff. Denkbar ist jedoch, dass zusätzliche Adhäsionsschichten vorgesehen sind, um die Verbindung der ersten und zweiten Werkstoffe zu verbessern. Zweckmässigerweise ist der Strukturwerkstoff ausgewählt aus einem der nachfolgenden Materialkomponenten:Polyethylen (PE), Polypropyen (PP), HDPE, und der Barrierewerkstoff ist ausgewählt aus einer der nachfolgenden Materialkomponenten: EVOH, Polyamid, Polyimid, Vorteilhafte Materialkompositionen sind beispielsweise Polyethylen (PE) oder HDPE als Strukurwerkstoffe mit Polyamid (PA) als Barrierewerkstoff, sowie Polypropylen (PP) als Strukurwerkstoff mit EVOH als Barrierewerkstoff.

Ausführungsbeispiele der Erfindung werden nun unter Bezugnahme auf die Zeichnungen beschrieben. Es zeigen:
- Figur 1:: schematisch eine Teilansicht einer erfindungsgemässen Spritzgiessvorrichtung zur Herstellung eines Tubenkopfes bestehend aus einem einen Formhohlraum aufweisenden Formwerkzeug mit einem Formeinsatz und einer Düse, wobei das erste und das zweite Ventil sich in der Schliessstellung befindet;
- Figur 2 und 3:: die Spritzgiessvorrichtung von Fig. 1 mit beiden Ventilen in der Offenstellung, wobei zwei Materialkomponenten bereits teilweise in den Formhohlraum eingedrungen sind (Fig. 2), resp. diese fast ausfüllen;
- Figur 4:: die Spritzgiessvorrichtung von Fig. 1 mit dem ersten Ventil in der Offenstellung und dem zweiten Ventilin der Schliessstellung;

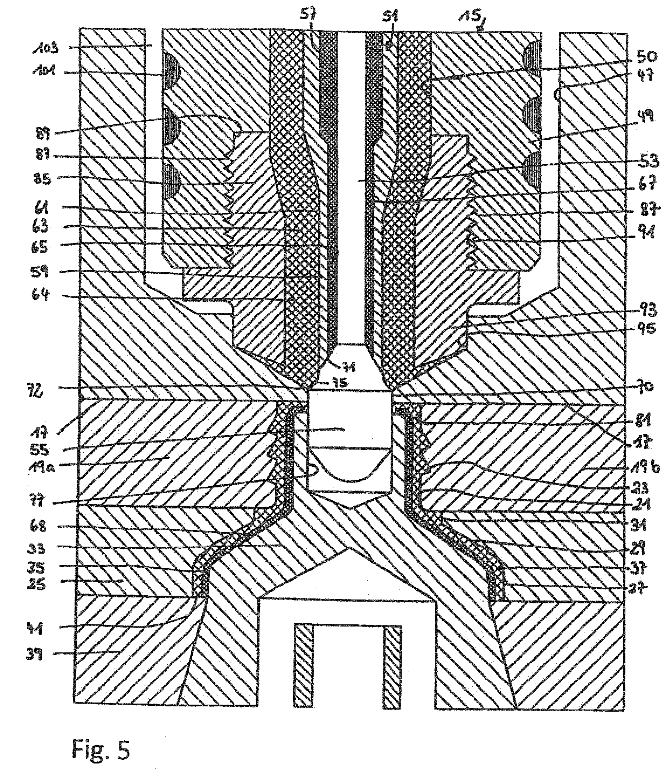

- Figur 5:: die Spritzgiessvorrichtung von Fig. 1 mit beiden Ventilen in der Schliessstellung am Ende eines Spritzgiesszyklus;

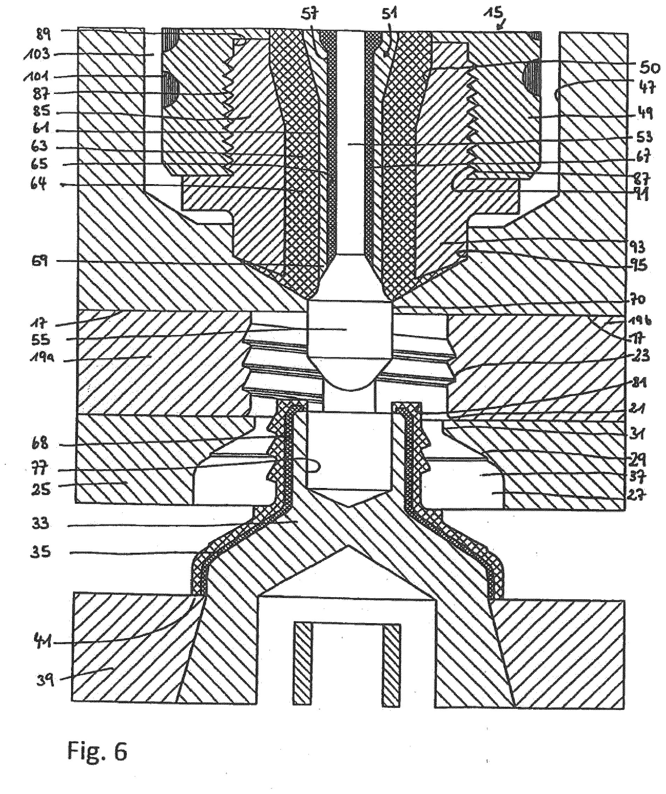

- Figur 6:: die Spritzgiessvorrichtung von Fig. 1 beim Entformungsvorgang;
- Figur 7 bis 9:: verschiedene Stufen bei der Herstellung einer 3-schichtigen Tubenkopfes.

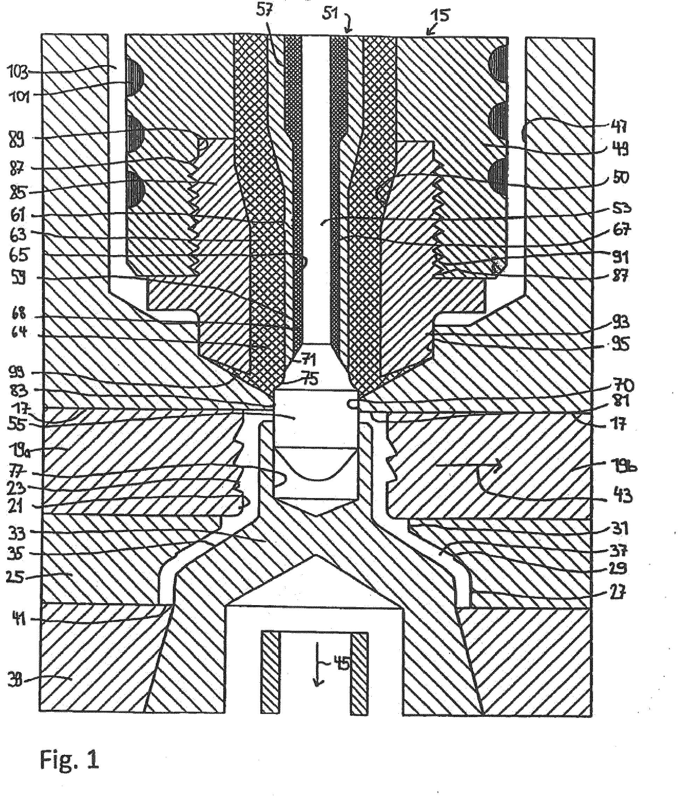

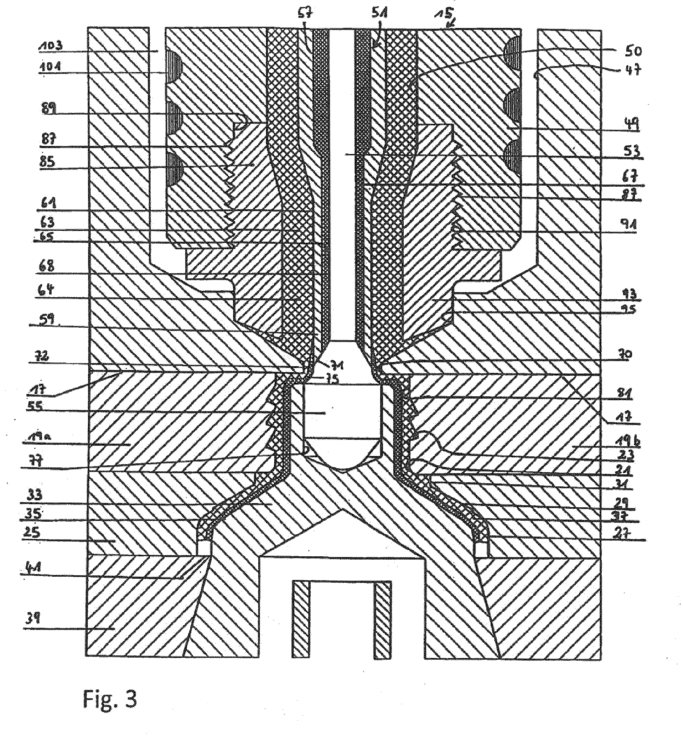

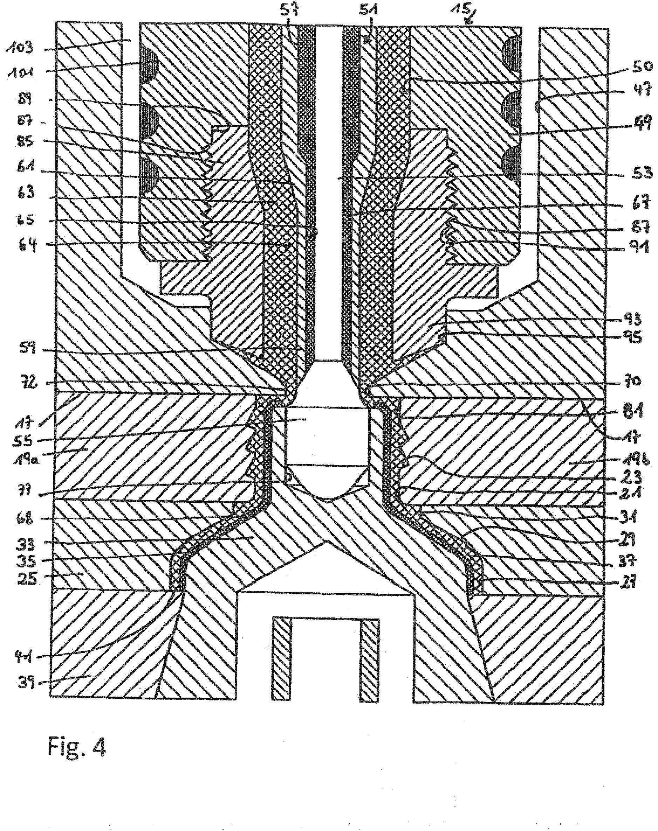

Die in den Figuren 1 bis 4 gezeigte Spritzgiessvorrichtung 11 zur Herstellung mindestens eines Tubenkopfes umfasst ein Formwerkzeug mit einem Formeinsatz 13 und eine mit dem Formeinsatz 13 zusammenwirkende Düse 15. Der Formeinsatz 13 und die Düse 15 sind in einer Kavität eines in den Figuren nicht näher dargestellten Formwerkzeugblocks aufgenommen. Im Formwerkzeugblock können eine Mehrzahl solcher Spritzgiessvorrichtungen nebeneinander vorhanden sein, um in einem Arbeitszyklus mehrere Tubenköpfe gleichzeitig herstellen zu können. Die Spritzgiessvorrichtungen stehen in bekannter Art über Verteilerkanäle mit einem oder mehreren Extrudern in Verbindung.

Der Formeinsatz 13 besitzt eine Ausnehmung 17, in welcher zwei bewegliche Schiebeteile 19a,19b formschlüssig aufgenommen sind. Die Schiebeteite 19a,19b bilden zusammen zwei Formhälften, deren Innenkontur 21 der Aussenkontur eines herzustellenden Tubenhalses entspricht. Die Innnenkontur 21 besitzt schraubenlinienförmig verlaufende Rillen 23, welche das Aussengewinde des Tubenhalses formen.

Der Formeinsatz 13 hat einen hinteren, unmittelbar an die Schiebeteile 19a, 19b anschliessenden Formabschnitt 25, welcher das Negativ der äusseren Kontur der herzustellenden Tubenschulter abbildet. Der Formabschnitt 25 besitzt einen ersten zylindrischen Abschnitt 27, einen konischen Übergangsbereich 29 und einen zweiten zylindrischen Abschnitt 31, welcher an die beweglichen Schiebeteile 19a,19b anschliesst. Der zweite zylindrische Abschnitt 31 dient der Herstellung eines Tubenkragens, welcher sich zwischen Tubenhals und Tubenschulter befindet. Die Ausformung eines Tubenkragens ist nicht zwingend, jedoch aus herstellungstechnischer Sicht zu empfehlen, da ansonsten - bedingt durch die Mehrteiligkeit des Formeinsatzes - ein störender Ringwulst oder zumindest ein sichtbarer Rand übrigbleiben würde.

Im Formabschnitt 25 ist ein axial beweglicher Kern 33 aufgenommen. Der Kern 33 besitzt eine Aussenkontur 35, welche der Innenkontur des herzustellenden Tubenkopfes entspricht. Zwischen dem Formeinsatz 13 und dem Kern 33 ist ein Formhohlraum 37 vorhanden, welcher im Spritzgiessvorgang vollständig mit einem fliessfähigen Kunststoffmaterial ausgefüllt wird.

Anschliessend an den Formabschnitt 25 ist ein sogenannter Abstreifer 39 vorgesehen. Der Abstreifer 39 bildet mit einem Ringabschnitt 41 die stirnseitige Rückwand des Tubenkopfes. Für die Entformung eines Tubenkopfes werden zunächst die Schiebeteile 19a,19b auseinander bewegt (Pfeil 43) und dann der Kern mit dem Abstreifer 39 in axialer Richtung (Pfeil 45) zurückgezogen. Dabei wird der fertige Tubenkopf durch den vorzugsweise beweglichen Abstreifer 39 vom ortsfesten Kern 33 abgezogen und fällt bei horizontalem Einbau des Formeinsatzes nach unten.

Die Düse 15 ist in einer Ausnehmung 47 des Formeinsatzes 13 angeordnet. Sie umfasst einen Düsenkörper 49 mit einem axialen Durchgang 50, in welchem eine Ventilnadel 51 axial beweglich angeordnet ist. Die Ventilnadel 51 besitzt einen Ventilnadelschaft 53 mit einem endständigen Ventilnadelkopf 55. Der Ventilnadelschaft 53 ist von einer axial beweglichen Ventilhülse 57 umgeben, welche einen Innendurchmesser grösser als der Aussendurchmesser des Ventilnadelschafts 53 hat und mit dem vorderen Ende 59 am Ventilnadelkopf 55 dichtend anliegen kann. Durch den erfindungsgemässen Düsenaufbau ist zwischen dem Aussenmantel 61 der Ventilhülse 57 und dem axialen Durchgang 50 ein erster Strömungskanal 63 für eine erste Materialkomponente 64, und zwischem der Innenwandung 65 der Ventilhülse 57 und dem Ventilnadetschaft 53 ein zweiter Strömungskanal 67 für eine zweite Materialkomponente 68 geschaffen.

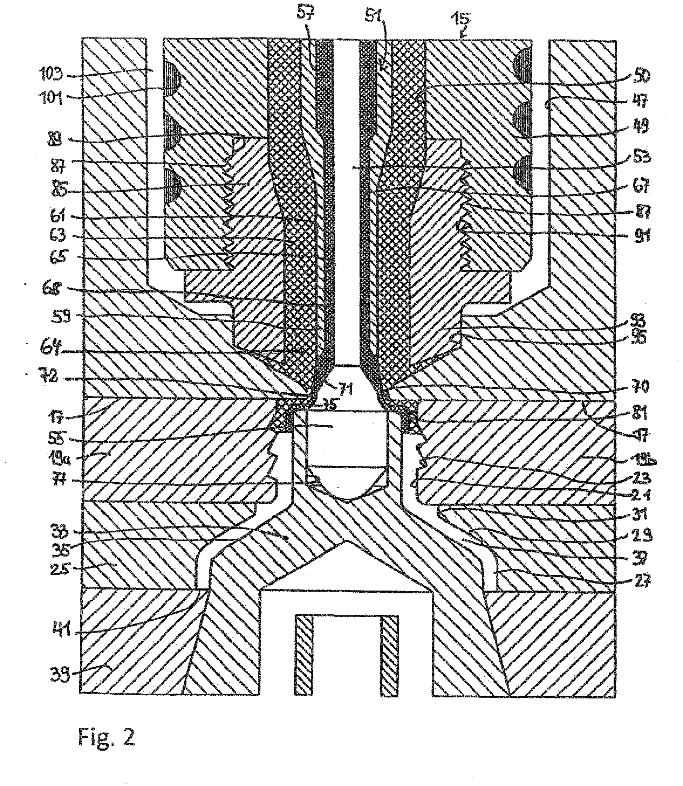

Der Ventilnadelkopf 55 besitzt einen zylindrischen Körper 69, welcher im Zusammenwirken mit einem zylindrischen Abschnitt 70 des Formeinsatzes ein erstes Ventil für die erste Materialkomponente 64 bildet. Bei geöffnetem ersten Ventil ist dabei eine Ringöffnung 72 gebildet (siehe z.B. Figur 2), durch welche die Schmelze in einem Winkel, radial nach aussen austreten kann. Der bevorzugte Winkel beträgt zwischen 30 und 90 Grad relativ zur Längsachse der Vorrichtung. Zwischen dem zylindrischen Körper 69 und dem Ventilnadelschaft 53 ist ein konischer Übergangsbereich 71 vorgesehen. Das vordere Ende 59 der Ventilhülse 57 ist dabei so ausgebildet, dass die distale Stirnfläche 73 flächig am Konus 71 anliegen kann und so ein zweites Ventil für die zweite Materialkomponente 68 gebildet ist. Zur Optimierung des Schmelzeflusses kann der Übergangsbereich 71 eine umlaufende Vertiefung 75 aufweisen, damit der Kunststoffschmelze beim Einspritzen in den Formhohlraum weniger Widerstand entgegengesetzt ist.

Anschliessend an den Formabschnitt 25 ist ein sogenannter Abstreifer 39 vorgesehen. Der Abstreifer 39 bildet mit einem Ringabschnitt 41 die stirnseitige Rückwand des Tubenkopfes. Für die Entformung eines Tubenkopfes werden zunächst die Schiebeteile 19a,19b auseinander bewegt (Pfeil 43) und dann der Kern mit dem Abstreifer 39 in axialer Richtung (Pfeil 45) zurückgezogen. Dabei wird der fertige Tubenkopf durch den vorzugsweise beweglichen Abstreifer 39 vom ortsfesten Kern 33 abgezogen und fällt bei horizontalem Einbau des Formeinsatzes nach unten.

Die Düse 15 ist in einer Ausnehmung 47 des Formeinsatzes 13 angeordnet. Sie umfasst einen Düsenkörper 49 mit einem axialen Durchgang 50, in welchem eine Ventilnadel 51 axial beweglich angeordnet ist. Die Ventilnadel 51 besitzt einen Ventilnadelschaft 53 mit einem endständigen Ventilnadelkopf 55. Der Ventilnadelschaft 53 ist von einer axial beweglichen Ventilhülse 57 umgeben, welche einen Innendurchmesser grösser als der Aussendurchmesser des Ventilnadelschafts 53 hat und mit dem vorderen Ende 59 am Ventilnadelkopf 55 dichtend anliegen kann. Durch den Düsenaufbau ist zwischen dem Aussenmantel 61 der Ventilhülse 57 und dem axialen Durchgang 50 ein erster Strömungskanal 63 für eine erste Materialkomponente 64, und zwischem der Innenwandung 65 der Ventilhülse 57 und dem Ventilnadelschaft 53 ein zweiter Strömungskanal 67 für eine zweite Materialkomponente 68 geschaffen.

Der Ventilnadelkopf 55 besitzt einen zylindrischen Körper 69, welcher im Zusammenwirken mit einem zylindrischen Abschnitt 70 des Formeinsatzes ein erstes Ventil für die erste Materialkomponente 64 bildet. Bei geöffnetem ersten Ventil ist dabei eine Ringöffnung 72 gebildet (siehe z.B. Figur 2), durch welche die Schmelze in einem Winkel, radial nach aussen austreten kann. Der bevorzugte Winkel beträgt zwischen 30 und 90 Grad relativ zur Längsachse der Vorrichtung. Zwischen dem zylindrischen Körper 69 und dem Ventilnadelschaft 53 ist ein konischer Übergangsbereich 71 vorgesehen. Das vordere Ende 59 der Ventilhülse 57 ist dabei so ausgebildet, dass die distale Stirnfläche 73 flächig am Konus 71 anliegen kann und so ein zweites Ventil für die zweite Materialkomponente 68 gebildet ist. Zur Optimierung des Schmelzeflusses kann der Übergangsbereich 71 eine umlaufende Vertiefung 75 aufweisen, damit der Kunststoffschmelze beim Einspritzen in den Formhohlraum weniger Widerstand entgegengesetzt ist.

Im Aussenmantel des Düsenkörpers ist eine Heizeinrichtung 101 eingelegt. Ausserdem ist zwecks thermischer Isolation zwischen der Düse 15 und dem Formeinsatz 13 ein Luftspalt 103 vorgesehen.

Die erfindungsgemässe Spritzgiessvorrichtung kann wie folgt verwendet werden: Zur Herstellung eines zweischichtigen Tubenvorderteils wird die Ventilnadel 51 in die Offenstellung gebracht und gleichzeitig die Ventilhülse 57 relativ zur Ventilnadel zurückgezogen, sodass sowohl das erste als auch das zweite Ventil im Wesentlichen gleichzeitig geöffnet werden. Dadurch können simultan ein erster Strukturwerkstoff 64 durch den ersten Strömungskanal und ein Barrierewerkstoff 68 durch den zweiten Strömungskanal durch die Ringöffnung und den Ringspalt in den Formhohlraum 37 fliessen. Kurz bevor der Formhohlraum mit den Materialkomponenten gefüllt ist, wird der Barrierewerkstoff 68 abgesetzt, damit dieser stirnseitig vom Strukturwerkstoff 64 begrenzt ist. Damit kann eine Delaminierung verhindert werden. Von Bedeutung ist also, dass beide Materialkomponenten während praktisch der ganzen Zykluszeit, oder zumindest während 90% der Zeitdauer, simultan eingespritzt werden - dies im Unterschied zum eingangs zitierten Stand der Technik.

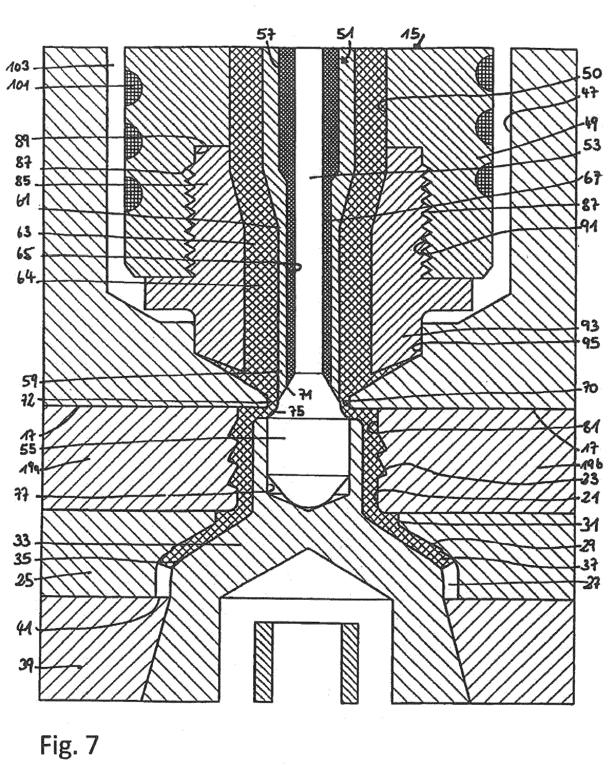

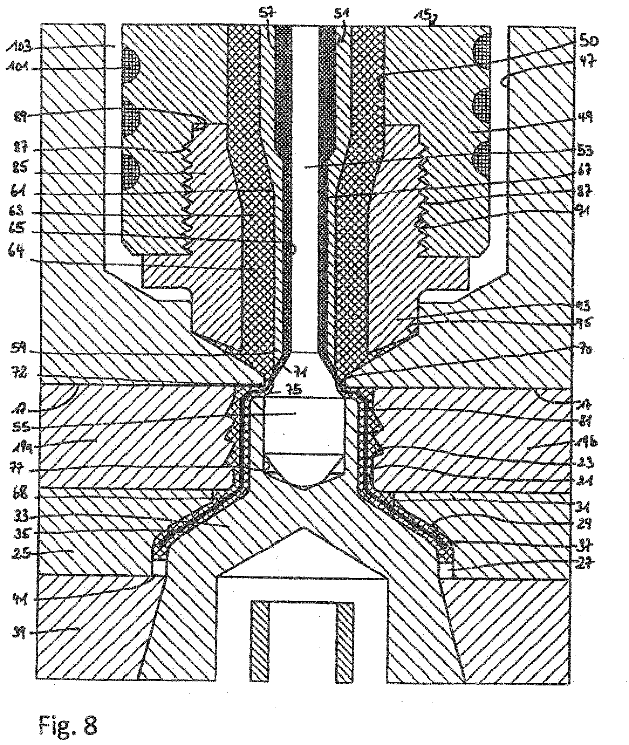

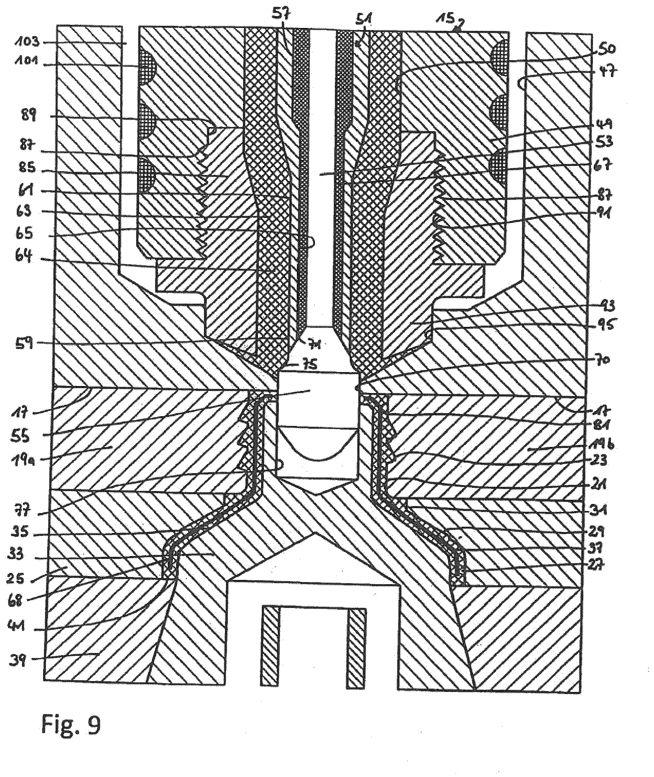

Zur Herstellung eines 3-schichtigen Tubenkopfes (Figuren 7 bis 9) wird zunächst der Strukturwerkstoff 64 in den Formhohlraum eingespritzt und zwar solange, bis dieser bis zu ca. 70 - 85 Volumenprozenten gefüllt ist (Fig. 7). Dann wird der Strukturwerkstoff abgesetzt und der Barrierewerkstoff 68 in die Seele des Strukturwerkstoffs 64 eingespritzt (Fig. 8). Da dieser zum Zeitpunkt, wenn mit dem Einspritzen des Barrierewerkstoffs begonnen wird, sich an den Aussenflächen bereits etwas verfestigt hat, kann der Barrierewerkstoff in der Seele des Strukturwerkstoffs weit in Richtung zur Stirnfläche 41 vordringen. Am Schluss wird der Barrierewerkstoff 68 abgesetzt und noch eine kleine Menge des Strukturwerkstoffs 64 eingespritzt, sodass letzterer den Barrierewerkstoff vorzugsweise vollständig umschliesst (Fig. 9).

Eine Spritzgiessvorrichtung zur Herstellung mindestens eines Tubenkopfes mit einer Tubenschulter und daran angeformtem Hals mit Auspressöffnung umfasst ein einen Formhohlraum 37 definierendes Formwerkzeug und eine mit dem Formwerkzeug zusammenwirkenden Düse 15. Die Düse 15 besitzt einen Düsenkörper 49 und eine im Düsenkörper 49 in Richtung der Tubenlängsachse bewegliche Ventilnadel 51. Diese besteht aus einem Ventilnadelschaft (53) und einem endständigen Ventilnadelkopf 55. Die Ventilnadel 51 ist von einem ersten Strömungskanal 63, durch welchen eine erste Materialkomponente 64 ausgepresst werden kann, umgeben. Die Öffnung 72 der Düse ist 15 einer zurückgezogenen Position der Ventilnadel 51 durch den Ventilnadelkopf 55 verschlossen und in einer vorgeschobenen Position der Ventilnadel 51 durch den Ventilnadelkopf 55 freigegeben, wobei in der vorgeschobenen Position der Ventilnadel 51 eine ringförmige Austrittsöffnung 72 gebildet ist, welche mit einem als Angussöffnung dienenden Ringspalt 83 des Formwerkzeugs eine Fluidverbindung in den Formhohlraum 37 herstellt.

### Legende

- 11: Spritzgiessvorrichtung
- 13: Formeinsatz
- 15: Düse
- 17: Ausnehmung
- 19a,19b: Schiebeteile
- 21: Innenkontur der Schiebeteile
- 23: Rillen (Gewindekontur)
- 25: Formabschnitt
- 27: erster zylindrischer Abschnitt
- 29: konischer Übergangsbereich
- 31: zweiter zylindrischer Abschnitt
- 33: Kern
- 35: Aussenkontur
- 37: Formhohlraum
- 39: Abstreifer
- 41: Ringabschnitt
- 43: Pfeile (Bewegungsrichtung der Schiebeteile)
- 45: Pfeil (Bewegungsrichtung des Kerns bei der Entformung)
- 47: Ausnehmung des Formeinsatzes
- 49: Düsenkörper
- 50: Durchgang im Formeinsatz
- 51: Ventilnadel
- 53: Ventilnadelschaft
- 55: Ventilnadelkopf
- 57: Ventilhülse
- 59: vorderes Ende der Ventilhülse
- 61: Aussenmantel der Ventilhülse
- 63: erster Strömungskanal
- 64: erste Materialkomponente (Strukturwerkstoff)
- 65: Innenwandung der Ventilhülse
- 67: zweiter Strömungskanal
- 68: zweite Materialkomponente (Barrierewerkstoff)
- 69: zylindrischer Körper des Ventilnadelkopfes
- 70: zylindrischer Abschnitt des Formeinsatzes für 1. Ventil
- 71: konischer Übergangsbereich
- 72: Ringöffnung
- 73: Stirnfläche der Ventilhülse
- 75: Vertiefung
- 77: Ausnehmung
- 79: ringförmiger (distaler) Rand des Kerns
- 81: ringförmige Fläche des Formeinsatzes gegenüberliegend dem Rand 79
- 83: Ringspalt
- 85: Dichtteil
- 87: Aussengewinde des Dichtteils
- 89: Bohrung
- 91: Innengewinde
- 93: zylindrischer Abschnitt des Dichtteils
- 95: zylindrischer Abschnitt des Formeinsatzes
- 97: Stirnfläche des Dichtteils
- 99: Spalt zwischen Stirnfläche und Formeinsatz
- 101: Heizeinrichtung
- 103: Luftspalt

## Patentansprüche

1. Spritzgiessvorrichtung zur Herstellung mindestens eines Tubenkopfes mit einer Tubenschulter und daran angeformtem Hals mit Auspressöffnung mit
- einem einen Formhohlraum (37) definierenden Formwerkzeug und
- einer mit dem Formwerkzeug zusammenwirkenden Düse mit
- einem Düsenkörper (49) und
- einer im Düsenkörper (49) in einer ersten Richtung, welche der Längsachse des herzustellenden Tubenkopfes entspricht, beweglichen Ventilnadel (51) mit einem Ventilnadelschaft (53) und einem endständigen Ventilnadelkopf (55),
- mindestens einem die Ventilnadel (51) umgebenden ersten Ringraum, welcher als erster Strömungskanal (63) für eine erste Materialkomponente dient, und
- einer Düsenöffnung, welche in einer zurückgezogenen Position der Ventilnadel (51) durch den Ventilnadelkopf (55) verschlossen und in einer vorgeschobenen Position der Ventilnadel (51) durch den Ventilnadelkopf (55) freigegeben ist,
**dadurch gekennzeichnet,**
**dass** in der vorgeschobenen Position der Ventilnadel (51) eine ringförmige Austrittsöffnung (72) gebildet ist, welche mit einem als Angussöffnung dienenden Ringspalt (83) des Formwerkzeugs korreliert, und
**dass** eine bewegliche, den Ventilnadetschaft (53) umgebende Ventilhülse (57) vorgesehen ist, wobei zwischen dem Ventilnadelschaft (53) und der Ventilhülse (57) ein zweiter Ringraum vorhanden ist, welcher als zweiter Strömungskanal (67) für eine zweite Materialkomponente dient.

2. Vorrichtung nach Anspruch 1, **dadurch gekennzeichnet, dass** die Ventilnadel (51) und die Ventilhülse (57) unabhängig voneinander axial beweglich sind.

3. Vorrichtung nach einem der Ansprüche 1 oder 2, **dadurch gekennzeichnet, dass** zwischen dem Ventilnadelschaft (53) und dem Ventilnadelkopf (55) ein konischer Übergangsbereich (75) vorgesehen ist und zur Bildung eines zweiten Ventils die Stirnseite (73) der Ventilhülse (57) mit dem konischen Übergangsbereich (71) zusammenwirken kann.

4. Vorrichtung nach Anspruch 3, **dadurch gekennzeichnet, dass** der konische Übergangsbereich (71) angrenzend an den zylindrischen Körper (55) des Ventilnadelkopfes (55) eine umlaufende Vertiefung (75) aufweist.

5. Vorrichtung nach einem der vorhergehenden Ansprüche, **dadurch gekennzeichnet, dass** das Formwerkzeug einen Formeinsatz (13), welcher im Wesentlichen die äussere Gestalt des Tubenkopfes definiert, und
einen Kern (33) besitzt, welcher die innere Gestalt des Tubenkopfes abbildet.

6. Vorrichtung nach Anspruch 5, **dadurch gekennzeichnet, dass** der Kern (33) in Tubenlängsachse beweglich ist.

7. Vorrichtung nach Anspruch 5 oder 6, **dadurch gekennzeichnet, dass** der Kern (33) stirnseitig eine Ausnehmung (77) in der Gestalt eines Hohlzylinders für die Aufnahme des Ventünadelkopfes (55) hat.

8. Vorrichtung nach einem der Ansprüche 5 bis 7, **dadurch gekennzeichnet, dass** ein zylindrischer Abschnitt des Formeinsatzes (13) im Zusammenwirken mit dem Ventilnadelkopf (55) ein erstes Ventil bildet.

9. Verfahren zur Herstellung eines Tubenkopfes mit einer Tubenschulter und daran angeformtem Hals mit Auspressöffnung in einem Spritzgiessverfahren mittels einer Vorrichtung nach einem der Ansprüche 1 bis 8,
**dadurch gekennzeichnet,**
**dass** Kunststoff mittels einer Düse durch einen Ringspalt (83) in einen Formhohlraum (37) eines Formwerkzeugs eingespritzt wird.

10. Verfahren nach Anspruch 9, **dadurch gekennzeichnet, dass** zur Herstellung eines mindestens zweischichtigen Tubenkopfes eine erste Materialkomponente und eine zweite Materialkomponente gleichzeitig eingespritzt werden.

11. Verfahren nach Anspruch 9 oder 10, **dadurch gekennzeichnet, dass** die zweite Materialkomponente mit einer zeitlichen Verzögerung eingespritzt wird.

12. Verfahren nach Anspruch 9 oder 11, **dadurch gekennzeichnet, dass** die zweite Materialkomponente erst eingespritzt wird, wenn der Formhohlraum (37) durch die erste Materialkomponente zu mindestens 50%, vorzugsweise mindestens 65% und besonders bevorzugt zu mindestens 75% gefüllt ist.

13. Verfahren nach einem der Ansprüche 9 bis 12, **dadurch gekennzeichnet, dass** am Ende eines Spritzgiesszyklus die zweite Materialkomponente eine bestimmte Zeitdauer vor der ersten Materialkomponente abgesetzt wird.

14. Verfahren nach Anspruch 13, **dadurch gekennzeichnet, dass** die Zeitdauer zwischen 0.01 und 0,5s, vorzugsweise zwischen 0.05 und 0.3s und besonders bevorzugt zwischen 0.1 und 0.2 s beträgt.

## Claims

1. Injection molding device for producing at least one tube head with a tube shoulder and a neck molded thereon with a squeezing-out opening with
- a molding tool defining a molding cavity (37) and
- a nozzle cooperating with the molding tool with
- a nozzle body (49) and
- a valve needle (51), movable in the nozzle body (49) in a first direction that corresponds to the longitudinal axis of the tube head to be produced, with a valve needle stem (53) and a terminal valve needle head (55),
- at least a first annular space surrounding the valve needle (51) that serves as a first flow channel (63) for a first material component and
- a nozzle opening that is closed by the valve needle head (55) in a retracted position of the valve needle (51) and that is released by the valve needle head (55) in a moved forward position of the valve needle (51),
**characterized in that**
- an annular squeezing-out opening (72) is formed in the moved forward position of the valve needle (51) that correlates with an annular space (83) of the molding tool serving as a casting opening and
- a movable valve sleeve (57) that surrounds the valve needle stem (53) is provided, wherein a second annular space that serves as a second flow channel (67) for a second material component exists between the valve needle stem (53) and the valve sleeve (57).

2. Device according to claim 1, **characterized in that** the valve needle (51) and the valve sleeve (57) are axially movable independently from one another.

3. Device according to one of the claims 1 or 2, **characterized in that** a conical transition region (71) is provided between the valve needle stem (53) and the valve needle head (55) and that the front side (73) of the valve sleeve (57) can cooperate with the conical transition region (71) to form a second valve.

4. Device according to claim 3, **characterized in that** the conical transition region (71) has a peripheral recess (75) adjacent to the cylindrical body (55) of the valve needle head (55).

5. Device according to any one of prior claims, **characterized in that** the mold has a mold insert (13) that substantially defines the outer shape of the tube head, and has a core (33) that forms the inner shape of the tube head.

6. Device according to claim 5, **characterized in that** the core (33) is moveable in the direction of the tube longitudinal axis.

7. Device according to claim 5 or 6, **characterized in that** the core (33) has on the front side a recess (77) in the shape of a hollow cylinder for accommodating the valve needle head (55).

8. Device according to any one of claims 5 to 7, **characterized in that** a cylindrical section of the mold insert (13) in co-operation with the valve needle head (55) forms a first valve.

9. Method for producing a tube head with a tube shoulder and neck formed thereon with an extrusion opening in an injection molding method by means of a device according to any one of claims 1 to 8, **characterized in that** plastic is injected by means of a nozzle through an annular gap (83) into a mold hollow space (37) of a mold.

10. Method according to claim 9, **characterized in that** in order to produce an at least two-layer tube head a first material component and a second material component are injected in simultaneously.

11. Method according to claim 9 or 10, **characterized in that** the second material component is injected in after a time delay.

12. Method according to claim 9 to 11, **characterized in that** the second material component is only injected in when the mold hollow space (37) is at least 50%, preferably at least 65% and particularly preferably at least 75% filled by the first material component.

13. Method according to any one of claims 9 to 12, **characterized in that** at the end of an injection molding cycle the injection of the second material component is stopped a certain time before the first material component.

14. Method according to claim 13, **characterized in that** the time is between 0.01 and 0.5 sec, preferably between 0.05 and 0.3 sec and particularly preferably between 0,1 and 0.2 sec.

## Revendications

1. Dispositif de moulage par injection pour fabriquer au moins une tête de tube avec un épaulement de tube et un col moulé sur celui-ci avec une ouverture d'expulsion avec
- un outil de moulage qui définit une cavité de moulage (37) et
- une tuyère qui coopère avec l'outil de moulage avec
- un corps de tuyère (49) et
- une aiguille de soupape (51), mobile dans le corps de tuyère (49) dans une première direction qui correspond à l'axe longitudinal de la tête de tube à fabriquer, avec une tige d'aiguille de soupape (53) et une tête d'aiguille de soupape terminale (55),
- au moins un premier espace annulaire qui entoure l'aiguille de soupape (51) qui sert de premier canal d'écoulement (63) pour un premier composant de matériau et
- une ouverture de tuyère qui est fermée, dans une position en retrait de l'aiguille de soupape (51), par la tête d'aiguille de soupape (55) et qui est dégagée, dans une position poussée en avant de l'aiguille de soupape (51), par la tête d'aiguille de soupape (55),
**caractérisé en ce**
- **qu'**une ouverture d'expulsion annulaire (72), qui est corrélée avec une fente annulaire (83) de l'outil de moulage qui sert d'ouverture de coulée, est formée dans la position poussée en avant de l'aiguille de soupape (51) et
- **qu'**il est prévu une douille de soupape mobile (57) qui entoure la tige d'aiguille de soupape (53), cependant qu'un second espace annulaire, qui sert de second canal d'écoulement (67) pour un second composant de matériau, existe entre la tige d'aiguille de soupape (53) et la douille de soupape (57).

2. Dispositif selon la revendication 1, **caractérisé en ce que** l'aiguille de soupape (51) et la douille de soupape (57) sont mobiles dans le sens axial indépendamment l'une de l'autre.

3. Dispositif selon l'une des revendications 1 ou 2, **caractérisé en ce qu'**il est prévu une zone de transition conique (71) entre la tige d'aiguille de soupape (53) et la tête d'aiguille de soupape (55) et que la face frontale (73) de la douille de soupape (57) peut coopérer avec la zone de transition conique (71) pour former une seconde soupape.

4. Dispositif selon la revendication 3, **caractérisé en ce que** la zone de transition conique (71) présente un évidement périphérique (75) voisin du corps cylindrique (55) de la tête d'aiguille de soupape (55).

5. Dispositif selon l'une des revendications précédentes, **caractérisé en ce que** l'outil de moulage possède un insert de moulage (13), qui définit substantiellement la configuration extérieure de la tête de tube, et un noyau (33) qui reproduit la configuration intérieure de la tête de tube.

6. Dispositif selon la revendication 5, **caractérisé en ce que** le noyau (33) est mobile dans le sens longitudinal du tube.

7. Dispositif selon la revendication 5 ou 6, **caractérisé en ce que** le noyau (33) a, sur le côté frontal, un évidement (77) en forme de cylindre creux pour le logement de la tête d'aiguille de soupape (55).

8. Dispositif selon l'une des revendications 5 à 7, **caractérisé en ce qu'**une portion cylindrique de l'insert de moulage (13) forme, en coopération avec la tête d'aiguille de soupape (55), une première soupape.

9. Procédé pour fabriquer une tête de tube avec un épaulement de tube et un col moulé sur celui-ci avec une ouverture d'expulsion dans un procédé de moulage par injection au moyen d'un dispositif selon l'une des revendications 1 à 8, **caractérisé en ce que** du plastique est injecté au moyen d'une tuyère par une fente annulaire (83) dans une cavité de moulage (37) d'un outil de moulage.

10. Procédé selon la revendication 9, **caractérisé en ce que** pour la fabrication d'une tête de tube au moins en deux couches un premier composant de matériau et un second composant de matériau sont injectés simultanément.

11. Procédé selon la revendication 9 ou 10, **caractérisé en ce que** le second composant de matériau est injecté avec un décalage temporel.

12. Procédé selon la revendication 9 ou 11, **caractérisé en ce que** le second composant de matériau n'est injecté que lorsque la cavité de moulage (37) est remplie à au moins 50% avec le premier composant de matériau, de préférence à au moins 65% et de manière particulièrement préférée à au moins 75%.

13. Procédé selon l'une des revendications 9 à 12, **caractérisé en ce qu'**à la fin d'un cycle de moulage par injection le second composant de matériau se dépose pendant une certaine durée avant le premier composant de matériau.

14. Procédé selon la revendication 13, **caractérisé en ce que** la durée est entre 0,01 et 0,5 s, de préférence entre 0,05 et 0,3 s et de manière particulièrement préférée entre 0,1 et 0,2 s.
